# EUROPEAN PATENT SPECIFICATION

(11) **EP 2 081 994 B1**
(45) Date of publication and mention of the grant of the patent: **28.04.2010**
(21) Application number: 07871044.9
(22) Date of filing: 24.08.2007
(51) Int. Cl.: C08L 71/00, C08L 53/02

(54) **POLY(ARYLENE ETHER)/POLYOLEFIN COMPOSITION, METHOD, AND ARTICLE**
POLY(ARYLENETHER)POLYOLEFINZUSAMMENSETZUNG SOWIE VERFAHREN DAFÜR UND ARTIKEL DARAUS
COMPOSITION DE POLY(ÉTHER D'ARYLÈNE)/POLYOLÉFINE, PROCÉDÉ ET ARTICLE

(30) Priority: 13.11.2006 US 559008
(43) Date of publication of application: 29.07.2009
(73) Proprietor: SABIC Innovative Plastics IP B.V., 4612 PX Bergen op Zoom (NL)
(72) Inventor: RAJAMANI, Vijay, Slingerlands, NY 12159 (US); PECAK, William, Eugene, Cohoes, NY 12047 (US)
(74) Representative: Bublak, Wolfgang
(86) International application number: PCT/US2007/076715
(87) International publication number: WO 2008/076480

(56) References cited:
- WO-A-02/053644
- WO-A-2008/060738
- US-A1- 2006 135 695

## Description

### BACKGROUND OF THE INVENTION

Poly(arylene ether) resin is a type of plastic known for its excellent water resistance, dimensional stability, and inherent flame retardancy. Properties such as strength, stiffness, chemical resistance, and heat resistance can be tailored by blending it with various other plastics in order to meet the requirements of a wide variety of consumer products, for example, plumbing fixtures, electrical boxes, automotive parts, and coated wire.

Common plastics blended with poly(arylene ether) include polystyrenes, nylons, and polyolefins. Although polyolefins often exhibit good resistance to solvents and oils, poly(arylene ether)s tend to be less resistant to these chemicals. Therefore, blends of polyolefins and poly(arylene ether)s are often unsuitable to make plastic parts that are routinely exposed to solvents and oils. This is particularly true for underhood automotive parts, which can be exposed to gasoline, motor oil, brake fluid, and transmission fluid. Such automotive parts are often made from the halogenated resin polyvinyl chloride. There is an increasing desire to reduce or eliminate the use of halogenated resins in insulating layers due to their negative impact on the environment. In fact, many countries are beginning to mandate a decrease in the use of halogenated materials.

There is therefore an urgent need for halogen-free plastics that exhibit the physical properties and chemical resistance required for flexible underhood automotive parts.

### BRIEF DESCRIPTION OF THE INVENTION

The above-described and other drawbacks are alleviated by a composition comprising: about 10 to about 35 weight percent of a poly(arylene ether); about 15 to about 40 weight percent of a polyolefin; and about 10 to about 35 weight percent of a hydrogenated block copolymer of an alkenyl aromatic compound and a conjugated diene; wherein the hydrogenated block copolymer has a poly(alkenyl aromatic) content of about 10 to 45 weight percent, based on the total weight of the hydrogenated block copolymer; and wherein the hydrogenated block copolymer has a weight average molecular weight greater than or equal to 200,000 atomic mass units; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790.

Another embodiment is a composition consisting of: about 10 to about 35 weight percent of a poly(arylene ether); about 15 to about 40 weight percent of a polyolefin; about 10 to about 35 weight percent of a hydrogenated block copolymer of an alkenyl aromatic compound and a conjugated diene; wherein the hydrogenated block copolymer has a poly(alkenyl aromatic) content of about 10 to 45 weight percent, based on the total weight of the hydrogenated block copolymer; and wherein the hydrogenated block copolymer has a weight average molecular weight greater than or equal to 200,000 atomic mass units; optionally, up to 10 weight percent of a second hydrogenated block copolymer of an alkenyl aromatic compound and a conjugated diene; wherein the second hydrogenated block copolymer has a poly(alkenyl aromatic) content of about 10 to 45 weight percent, based on the total weight of the hydrogenated block copolymer, and a weight average molecular weight of about 40,000 to less than 200,000 atomic mass units; optionally, up to 10 weight percent of a third hydrogenated block copolymer of an alkenyl aromatic compound and a conjugated diene; wherein the third hydrogenated block copolymer has a poly(alkenyl aromatic) content of greater than 45 to about 90 weight percent, based on the total weight of the third hydrogenated block copolymer; optionally, up to 5 weight percent of an unhydrogenated block copolymer of an alkenyl aromatic compound and a conjugated diene; optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, metal deactivators, antiblocking agents, nanoclays, and combinations thereof; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790.

Another embodiment is a composition comprising: about 15 to about 30 weight percent of a poly(2,6-dimethyl-1,4-phenylene ether) having an intrinsic viscosity of about 0.3 to about 0.6 deciliter per gram, measured at 25°C in chloroform; about 15 to about 35 weight percent of a polyolefin selected from the group consisting of polypropylene, high density polyethylene, and combinations thereof; about 10 to about 30 weight percent of a hydrogenated block copolymer that is a polystyrene-poly(ethylene-butylene)-polystyrene triblock copolymer; wherein the hydrogenated block copolymer has a polystyrene content of about 25 to about 35 weight percent, based on the total weight of the hydrogenated block copolymer; and wherein the hydrogenated block copolymer has a weight average molecular weight of 200,000 to about 400,000 atomic mass units; about 1 to about 10 weight percent of melamine polyphosphate; about 2 to about 10 weight percent of magnesium hydroxide; and about 5 to about 20 weight percent of a triaryl phosphate flame retardant; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a composition consisting of: about 15 to about 30 weight percent of a poly(2,6-dimethyl-1,4-phenylene ether) having an intrinsic viscosity of about 0.3 to about 0.6 deciliter per gram, measured at 25°C in chloroform; about 15 to about 35 weight percent of a polyolefin selected from the group consisting of polypropylene, high density polyethylene, and combinations thereof; about 10 to about 30 weight percent of a hydrogenated block copolymer that is a polystyrene-poly(ethylene-butylene)-polystyrene triblock copolymer; wherein the hydrogenated block copolymer has a polystyrene content of about 25 to about 35 weight percent, based on the total weight of the hydrogenated block copolymer; and wherein the hydrogenated block copolymer has a weight average molecular weight of 200,000 to about 400,000 atomic mass units; optionally, up to 10 weight percent of a second hydrogenated block copolymer of an alkenyl aromatic compound and a conjugated diene, wherein the second hydrogenated block copolymer has a poly(alkenyl aromatic) content of about 10 to 45 weight percent, based on the total weight of the hydrogenated block copolymer, and a weight average molecular weight of about 40,000 to less than 200,000 atomic mass units; optionally, up to 10 weight percent of a third hydrogenated block copolymer of an alkenyl aromatic compound and a conjugated diene, wherein the third hydrogenated block copolymer has a poly(alkenyl aromatic) content of greater than 45 to about 90 weight percent, based on the total weight of the third hydrogenated block copolymer; optionally, up to 5 weight percent of an unhydrogenated block copolymer of an alkenyl aromatic compound and a conjugated diene; optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, metal deactivators, antiblocking agents, nanoclays, and combinations thereof; about 1 to about 10 weight percent of melamine polyphosphate; about 2 to about 10 weight percent of magnesium hydroxide; and about 5 to about 20 weight percent of a triaryl phosphate flame retardant; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a composition comprising: about 18 to about 25 weight percent of a poly(2,6-dimethyl-1,4-phenylene ether) having an intrinsic viscosity of about 0.3 to about 0.6 deciliter per gram, measured at 25°C in chloroform; about 20 to about 30 weight percent of a polyolefin selected from the group consisting of polypropylene, high density polyethylene, and combinations thereof; about 15 to about 25 weight percent of a hydrogenated block copolymer that is a polystyrene-poly(ethylene-butylene)-polystyrene triblock copolymer; wherein the hydrogenated block copolymer has a polystyrene content of about 25 to about 35 weight percent, based on the total weight of the hydrogenated block copolymer; and wherein the hydrogenated block copolymer has a weight average molecular weight of 200,000 to about 400,000 atomic mass units; about 1 to about 10 weight percent of melamine polyphosphate; about 2 to about 10 weight percent of magnesium hydroxide; and about 5 to about 20 weight percent of a triaryl phosphate flame retardant; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 25 to about 27 weight percent of a high density polyethylene; about 15 to about 17 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 3 to about 5 weight percent of a third hydrogenated block copolymer that is a polystyrene-poly(ethylene-butylene)-polystyrene triblock copolymer; wherein the third hydrogenated block copolymer has a polystyrene content of about 55 to about 75 weight percent, based on the total weight of the hydrogenated block copolymer; and wherein the third hydrogenated block copolymer has a weight average molecular weight of about 30,000 to about 60,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-ter-t-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 23 to about 25 weight percent of a high density polyethylene; about 19 to about 21 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 1 to about 3 weight percent of a second hydrogenated block copolymer that is a polystyrene-poly(ethylene-butylene)-polystyrene triblock copolymer; wherein the second hydrogenated block copolymer has a polystyrene content of about 25 to about 35 weight percent, based on the total weight of the hydrogenated block copolymer; and wherein the second hydrogenated block copolymer has a weight average molecular weight of about 100,000 to about 140,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-tert-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 25 to about 27 weight percent of a high density polyethylene; about 15 to about 17 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 3 to about 5 weight percent of a second hydrogenated block copolymer that is a polystyrene-poly(ethylene-butylene)-polystyrene triblock copolymer; wherein the second hydrogenated block copolymer has a polystyrene content of about 25 to about 35 weight percent, based on the total weight of the hydrogenated block copolymer; and wherein the second hydrogenated block copolymer has a weight average molecular weight of about 100,000 to about 140,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-tent-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a composition comprising: about 21 to about 23 weight percent of a poly(2,6-dimethyl-1,4-phenytene ether) having an intrinsic viscosity of about 0.3 to about 0.6 deciliter per gram, measured at 25°C in chloroform; about 23 to about 25 weight percent of a high density polyethylene; about 15 to about 17 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 5 to about 7 weight percent of a second hydrogenated block copolymer that is a polystyrene-poly(ethylene-butylene)-polystyrene triblock copolymer; wherein the second hydrogenated block copolymer has a polystyrene content of about 25 to about 35 weight percent, based on the total weight of the hydrogenated block copolymer; and wherein the second hydrogenated block copolymer has a weight average molecular weight of about 100,000 to about 140,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-tert-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790.

Another embodiment is a method of preparing a thermoplastic composition, comprising: melt kneading about 10 to about 35 weight percent of a poly(arylene ether); about 15 to about 40 weight percent of a polyolefin; and about 10 to about 35 weight percent of a hydrogenated block copolymer of an alkenyl aromatic compound and a conjugated diene; wherein the hydrogenated block copolymer has a poly(alkenyl aromatic) content of about 10 to 45 weight percent, based on the total weight of the hydrogenated block copolymer; and wherein the hydrogenated block copolymer has a weight average molecular weight greater than or equal to 200,000 atomic mass units; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790.

Another embodiment is a method of preparing a thermoplastic composition, comprising: melt kneading about 15 to about 30 weight percent of a poly(2,6-dimethyl-1,4-phenylene ether) having an intrinsic viscosity of about 0.3 to about 0.6 deciliter per gram, measured at 25°C in chloroform; about 15 to about 35 weight percent of a polyolefin selected from the group consisting of polypropylene, high density polyethylene, and combinations thereof; about 10 to about 30 weight percent of a polystyrene-poly(ethylene/butylene)-polystyrene triblock copolymer having a polystyrene content of about 25 to about 35 weight percent, based on the total weight of the triblock copolymer; and wherein the triblock copolymer has a weight average molecular weight of 200,000 to about 400,000 atomic mass units; about 1 to about 10 weight percent of melamine polyphosphate; about 2 to about 10 weight percent of magnesium hydroxide; and about 5 to about 20 weight percent of a triaryl phosphate flame retardant to form a blend; wherein all weight percents are based on the total weight of the composition, unless a different weight basis is specified; and melt filtering the blend through a filter comprising openings with diameters of about 20 micrometers to about 150 micrometers; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790.

Other embodiments are described in detail below, including articles comprising the compositions above, and in particular tubes for sheathing automotive wiring harnesses comprising the compositions above.

### BRIEF DESCRIPTION OF THE DRAWINGS

FIG. 1 includes transmission electron micrographs at two magnifications for a sample corresponding to Comparative Example 1.

FIG. 2 includes transmission electron micrographs at two magnifications for a sample corresponding to Example 1.

### DETAILED DESCRIPTION OF THE INVENTION

The present inventors have conducted experiments in search of halogen-free thermoplastic compositions suitable as a replacement for polyvinyl chloride in its use for automotive components in general and tubes for sheathing automotive wiring harnesses in particular. Initial blends of poly(arylene ether)s, polyolefins, and hydrogenated block copolymers exhibited many of the desired properties but were deficient in their chemical resistance. Further experimentation revealed that substantial and unexpected improvements in chemical resistance could be achieved by using particular high molecular weight hydrogenated block copolymers. These results were unexpected because the molecular weight of one component in a multi-component polymer blend would not ordinarily be expected to have a substantial effect on the chemical resistance of the blend unless the component has ultrahigh molecular weight (that is, a molecular weight in the millions). In this case the component has molecular weight less than 400,000. These results were unexpected because it has not previously been possible to achieve the combination of flexibility, good tensile strength, and good retention of tensile strength after chemical exposure. In particular, it has been very difficult to improve chemical resistance. Property retention after chemical immersion gives a measure of the material's ability to retain its mechanical integrity when exposed to different chemicals. It indicates the rate at which a property decays as it is exposed to a chemical. The automotive industry regards strength retention a better measure of a material's resistance to chemicals than the absolute strength after immersion. To measure the chemical resistance of a material, it is immersed in the chemical for a fixed period of time. However, in real applications the material may be exposed to the chemical for shorter or longer duration. The strength retention, and not the final strength, after chemical exposure gives an indication of which material is more robust to chemical exposure because it accounts for the rate at which the strength is decreasing. These results were unexpected because it has not previously been possible to achieve the combination of flexibility, good tensile strength, and good retention of tensile strength after chemical exposure. In particular, it has been very difficult to improve chemical resistance. Property retention after chemical immersion gives a measure of the material's ability to retain its mechanical integrity when exposed to different chemicals. It indicates the rate at which a property decays as it is exposed to a chemical. The automotive industry regards strength retention as a better measure of a material's resistance to chemicals than the absolute strength after immersion. To measure the chemical resistance of a material, it is immersed in the chemical for a fixed period of time. However, in real applications the material may be exposed to the chemical for shorter or longer duration. The strength retention, and not the final strength, after chemical exposure, gives an indication of which material is more robust to chemical exposure because it accounts for the rate at which the strength is decreasing. It is also surprising that use of the higher molecular weight component results in a chemically-resistant polymer blend with high flexibility.

One embodiment is composition comprising: about 10 to about 35 weight percent of a poly(arylene ether); about 15 to about 40 weight percent of a polyolefin; and about 10 to about 35 weight percent of a hydrogenated block copolymer of an alkenyl aromatic compound and a conjugated diene; wherein the hydrogenated block copolymer has a poly(alkenyl aromatic) content of about 10 to 45 weight percent, based on the total weight of the hydrogenated block copolymer; and wherein the hydrogenated block copolymer has a weight average molecular weight greater than or equal to 200,000 atomic mass units; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790. As demonstrated in the working examples, use of a hydrogenated block copolymer having a weight average molecular weight greater than or equal to 200,000 atomic mass units significantly improves the chemical resistance of the blend compared to corresponding blends with lower molecular weight hydrogenated block copolymers. (It should be noted that all molecular weight values recited herein are uncorrected values as determined by gel permeation chromatography using polystyrene standards.) In some embodiments, the composition has a ribbon tensile strength of 15 to 19.8 megapascals measured at 23°C according to JIS K6251. In some embodiments, the composition retains 65 to 73.4 percent of its ribbon tensile strength after 20 hours immersion in a 50:50 weight/weight mixture of kerosene and SAE 10W30 motor oil at 50°C. In some embodiments, the composition has a flexural modulus of 311 to 900 megapascals measured at 23°C according to ASTM D790.

The composition comprises a poly(arylene ether). In one embodiment, the poly(arylene ether) comprises repeating structural units having the formula 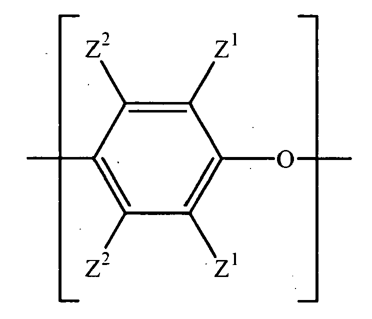 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio (that is, (C₁-C₁₂ hydrocarbyl)S-), C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties.

In some embodiments, the poly(arylene ether) comprises 2,6-dimethyl-1,4-phenylene ether units, 2,3,6-trimethyl-1,4-phenylene ether units, or a combination thereof.

The poly(arylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(arylene ether) can be in the form of a homopolymer, a copolymer, a graft copolymer, an ionomer, or a block copolymer, as well as combinations comprising at least one of the foregoing.

The poly(arylene ether) can have a number average molecular weight of 3,000 to 40,000 atomic mass units (AMU) and a weight average molecular weight of 5,000 to 80,000 AMU, as determined by gel permeation chromatography using monodisperse polystyrene standards, a styrene divinyl benzene gel at 40°C and samples having a concentration of 1 milligram per milliliter of chloroform. The poly(arylene ether) can have an intrinsic viscosity of about 0.05 to about 1.0 deciliter per gram (dL/g), as measured in chloroform at 25°C. Those skilled in the art understand that intrinsic viscosity of a poly(arylene ether) can increase by up to 30% on melt kneading. The above intrinsic viscosity range of 0.05 to about 1.0 deciliter per gram is intended to encompass intrinsic viscosities both before and after melt kneading to form the composition. Within the above range, the intrinsic viscosity can be at least about 0.1 dL/g, or at least about 0.2 dL/g, or at least about 0.3 dL/g. Also within the above range, the intrinsic viscosity can be up to about 0.8 dL/g, or up to about 0.6 dL/g. A blend of poly(arylene ether) resins having different intrinsic viscosities can be used.

The composition comprises about 10 to about 35 weight percent of the poly(arylene ether), based on the total weight of the composition. In some embodiments, the poly(arylene ether) amount is about 15 to about 30 weight percent, specifically about 18 to about 25 weight percent.

In addition to the poly(arylene ether), the composition comprises a polyolefin. Polyolefins are of the general structure CₙH₂ₙ and include polyethylene, polypropylene, and polyisobutylene, with exemplary homopolymers being linear low density polyethylene, atactic polypropylene, and isotatic polypropylene. Polyolefin resins of this general structure are commercially available, and methods for their preparation are known in the art. In some embodiments, the polyolefin is a homopolymer selected from polypropylene, high density polyethylene, and combinations thereof.

Copolymers of polyolefins can also be used, including copolymers of polypropylene with rubber homopolymers or copolymers or copolymers of polyethylene with rubber homopolymers or copolymers. The copolymer can include copolymers such as ethylene-octene rubber and ethylene-butadiene rubber, for example. Such copolymers are typically heterophasic and have sufficiently long sections of each component to have both amorphous and crystalline phases. Additionally the polyolefin can comprise a combination of homopolymer and copolymer, a combination of homopolymers having different melt temperatures, and/or a combination of homopolymers having a different melt flow rate.

In one embodiment the polyolefin comprises a crystalline polyolefin such as isotactic polypropylene. Crystalline polyolefins are defined as polyolefins having a crystallinity content greater than or equal to 20%, specifically greater than or equal to 25%, more specifically greater than or equal to 30%. Percent crystallinity can be determined by differential scanning calorimetry (DSC). In some embodiments, the polyolefin comprises a high density polyethylene. The high density polyethylene can have a density of 0.941 to 0.965 grams per milliliter.

In some embodiments, the polyolefin comprises a polypropylene having a melt temperature greater than or equal to 120°C, specifically greater than or equal to 125°C, more specifically greater than or equal to 130°C, even more specifically greater than or equal to 135°C. In some embodiments, the polypropylene has a melt temperature less than or equal to 175°C. In some embodiments, the polyolefin comprises a high density polyethylene having a melting temperature of greater than or equal to 124°C, specifically greater than or equal to 126°C, more specifically greater than or equal to 128°C. In some embodiments, the melting temperature of the high density polyethylene is less than or equal to 140°C.

In some embodiments, the polyolefin has a melt flow rate (MFR) of about 0.3 to about 10 grams per ten minutes (g/10 min). Specifically, the melt flow rate can be about 0.3 to about 5 g/10 min. Melt flow rate can be determined according to ASTM D1238 using either powdered or pelletized polyolefin, a load of 2.16 kilograms and a temperature suitable for the resin (190°C for ethylene based resins and 230°C for propylene based resins).

The composition can comprise the polyolefin in an amount of about 15 to about 40 weight percent, based on the total weight of the composition. Specifically, the polyolefin amount can be about 15 to about 35 weight percent, more specifically about 20 to about 30 weight percent.

In addition to the poly(arylene ether) and the polyolefin, the composition comprises a hydrogenated block copolymer of an alkenyl aromatic compound and a conjugated diene. This hydrogenated block copolymer, sometimes referred to herein as the "first hydrogenated block copolymer", has a poly(alkenyl aromatic) content of about 10 to 45 weight percent, based on the total weight of the hydrogenated block copolymer. Specifically, the poly(alkenyl aromatic) content can be about 10 to about 40 weight percent, or about 10 to about 35 weight percent. The hydrogenated block copolymer has a weight average molecular weight greater than or equal to 200,000 atomic mass units. As noted above, this molecular weight is determined by gel permeation chromatography and based on comparison to polystyrene standards. In some embodiments, the hydrogenated block copolymer has a weight average molecular weight of 200,000 to about 400,000 atomic mass units, specifically 220,000 to about 350,000 atomic mass units. Methods for making high molecular weight hydrogenated block copolymers are known in the art and described, for example, in U.S. Patent No. 3,431,323 to Jones. High molecular weight hydrogenated block copolymers are also commercially available as, for example, the polystyrene-poly(ethylene/butylene)-polystyrene triblock copolymer having a styrene content of 31 weight percent based and a weight average molecular weight of about 240,000 to about 301,000 atomic mass units (AMU) available from Kraton Polymers as KRATON G 1651.

The alkenyl aromatic monomer used to prepare the hydrogenated block copolymer can have the structure 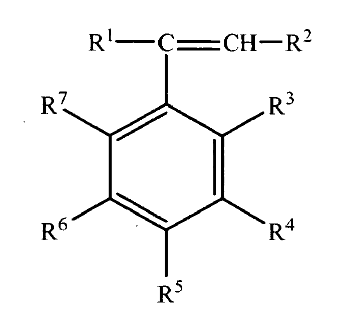 wherein R¹ and R² each independently represent a hydrogen atom, a C₁-C₈ alkyl group, or a C₂-C₈ alkenyl group; R³ and R⁷ each independently represent a hydrogen atom, a C₁-C₈ alkyl group, a chlorine atom, or a bromine atom; and R⁴-R⁶ each independently represent a hydrogen atom, a C₁-C₈ alkyl group, or a C₂-C₈ alkenyl group; or R³ and R⁴ are taken together with the central aromatic ring to form a naphthyl group, or R⁴ and R⁵ are taken together with the central aromatic ring to form a naphthyl group. Specific alkenyl aromatic monomers include, for example, styrene, chlorostyrenes such as p-chlorostyrene, and methylstyrenes such as alpha-methylstyrene and p-methylstyrene. In one embodiment, the alkenyl aromatic monomer is styrene.

The conjugated diene used to prepare the hydrogenated block copolymer can be a C₄-C₂₀, conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene consists of 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is reduced by hydrogenation. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. Method of preparing tapered block copolymers, which may also be referred to as controlled distribution block copolymers, are described, for example, in U.S. Patent Application No. US 2003/181584 A1 of Handlin et al. Suitable tapered block copolymers are also commercially available as, for example, KRATON A-RP6936 and KRATON A-RP6935 from Kraton Polymers. In some embodiments, the hydrogenated block copolymer has a non-tapered linear structure. In some embodiments, the hydrogenated block copolymer comprises a B block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B, wherein the molecular weight of each A block may be the same as or different from that of other A blocks, and the molecular weight of each B block may be the same as or different from that of other B blocks. In some embodiments, the hydrogenated block copolymer is a diblock copolymer, a triblock copolymer, or a combination thereof.

In some embodiments, the hydrogenated block copolymer is a polystyrene-poly(ethylene-butylene)-polystyrene triblock copolymer. In some embodiments, the hydrogenated block copolymer is a polystyrene-poly(ethylenepropylene) diblock copolymer. These block copolymers do not include the residue of any functionalizing agents or any monomers other than those indicated by their names.

In some embodiments, the hydrogenated block copolymer excludes the residue of monomers other than the alkenyl aromatic compound and the conjugated diene.

In some embodiments, the hydrogenated block copolymer excludes the residue of acid functionalizing agents, such as maleic anhydride. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms.

The composition comprises the hydrogenated block copolymer in an amount of about 10 to about 35 weight percent, based on the total weight of the composition. Specifically, the composition can comprise the hydrogenated block copolymer in an amount of about 10 to about 30 weight percent, more specifically about 12 to about 30 weight percent, even more specifically about 15 to about 25 weight percent.

In addition to the poly(arylene ether), the polyolefin, and the hydrogenated block copolymer, the composition may, optionally, further comprise a second, lower molecular weight hydrogenated block copolymer of an alkenyl aromatic compound and a conjugated diene. The second hydrogenated block copolymer can have a poly(alkenyl aromatic) content of about 10 to 45 weight percent, based on the total weight of the hydrogenated block copolymer. Specifically, the poly(alkenyl aromatic) content can be about 10 to about 40 weight percent, more specifically about 10 to about 35 weight percent. The second hydrogenated block copolymer can have a weight average molecular weight of about 40,000 to less than 200,000 atomic mass units. Specifically, the weight average molecular weight can be about 40,000 to about 180,000 atomic mass units, or about 40,000 to about 150,000 atomic mass units. Methods of preparing such lower molecular weight hydrogenated block copolymers are known in the art. Such copolymers are also commercially available as, for example, the polystyrene-poly(ethylene/butylene)-polystyrene triblock copolymer having a styrene content of 30 weight percent and a weight average molecular weight of 117,000 atomic mass units sold as KRATON G 1650 by Kraton Polymers. In some embodiments, the second hydrogenated block copolymer is a polystyrene-poly(ethylene-propylene) diblock copolymer. When present, the second hydrogenated block copolymer can be used in an amount of about 1 to about 10 weight percent based on the total weight of the composition, specifically about 2 to about 8 weight percent, more specifically about 5 to about 7 weight percent. In some embodiments, the composition is substantially free of the second hydrogenated block copolymer. In these embodiments, "substantially free" means that none of the second hydrogenated block copolymer is intentionally added to the composition. The composition can be "substantially free" of second hydrogenated block copolymer even though it can contain very small amounts of second hydrogenated block copolymer which are present as an impurity in the first hydrogenated block copolymer. For example, the composition can be "substantially free" of second hydrogenated block copolymer even though the first hydrogenated block copolymer is a triblock copolymer that contains up to 1 weight percent of a diblock copolymer impurity meeting the limitations of the second hydrogenated block copolymer.

The composition may, optionally, further comprise a third hydrogenated block copolymer that has a higher poly(alkenyl aromatic) content than the first hydrogenated block copolymer. The third hydrogenated block copolymer is a hydrogenated block copolymer of an alkenyl aromatic compound and a conjugated diene having a poly(alkenyl aromatic) content of greater than 45 to about 90 weight percent, based on the total weight of the third hydrogenated block copolymer. Specifically, the poly(alkenyl aromatic) content can be about 50 to about 85 weight percent, more specifically about 60 to about 80 weight percent. Methods of preparing such higher poly(alkenyl aromatic) content hydrogenated block copolymers are known in the art. There is no particular limit on the weight average molecular weight of the third hydrogenated block copolymer. Such copolymers are also commercially available as, for example, the polystyrene-poly(ethylene/hutylene)-polystyrene triblock copolymer having a styrene content of 67 weight percent and a weight average molecular weight of about 40,000 to 56,000 atomic mass units sold as TUFTEC H1043 by Asahi Chemical. When present, the third hydrogenated block copolymer can be used in an amount of about 1 to about 10 weight percent based on the total weight of the composition, specifically about 2 to about 7 weight percent, more specifically about 2 to about 5 weight percent. In some embodiments, the composition is substantially free of the third hydrogenated block copolymer. In these embodiment, "substantially free" means that no third hydrogenated block copolymer is intentionally added. The composition can be "substantially free" of third hydrogenated block copolymer even though it can contain very small amounts of third hydrogenated block copolymer which are present as an impurity in the first hydrogenated block copolymer.

The composition may, optionally, further comprise an unhydrogenated block copolymer of an alkenyl aromatic compound and a conjugated diene. The unhydrogenated block copolymer differs from the various hydrogenated block copolymers described above in that the aliphatic unsaturated group content in the poly(conjugated diene) blocks (B) have not been reduced by hydrogenation. The unhydrogenated block copolymer can comprise an poly(alkenyl aromatic) content of about 10 to about 90 weight percent, specifically about 20 to about 80 weight percent, more specifically about 25 to about 40 weight percent. There is no particular limit on the weight average molecular weight of the unhydrogenated block copolymer. Methods of preparing unhydrogenated block copolymers are known in the art. Such copolymers are also commercially available as, for example, the KRATON® D series polymers, including KRATON® D1101 and D 1102, from Kraton Polymers, and the styrene-butadiene radial teleblock copolymers available as, for example, K-RESIN KR01, KR03, KR05, and KR10 sold by Chevron Phillips Chemical Company. When present, the unhydrogenated block copolymer can be used in an amount of about 1 to about 10 weight percent based on the total weight of the composition, specifically about 2 to about 5 weight percent. In some embodiments, the composition is substantially free of the unhydrogenated block copolymer. In these embodiments, "substantially free" means that no unhydrogenated block copolymer is intentionally added. The composition can be "substantially free" of unhydrogenated block copolymer even though it can contain very small amounts of unhydrogenated block copolymer that are present as an impurity in the (first) hydrogenated block copolymer.

The composition may, optionally, further comprise various additives known in the thermoplastics art. For example, the composition may, optionally, further comprise an additive chosen from stabilizers, mold release agents, processing aids, flame retardants, drip retardants, nucleating agents, UV blockers, dyes, pigments, antioxidants, anti-static agents, blowing agents, mineral oil, metal deactivators, antiblocking agents, nanoclays, and the like, and combinations thereof. Additives can be added in amounts that do not unacceptably detract from the desired optical and physical properties of the composition. Such amounts can be determined by a skilled artisan without undue experimentation. Flame retardants described herein as "triaryl phosphate flame retardants" include compounds with at least one triaryl phosphate moiety. The triaryl phosphate flame retardant can include more than one triaryl phosphate moiety. Examples of triaryl phosphate flame retardants include triphenyl phosphate, tricresyl phosphate, resorcinol bis(diphenyl phosphate), bisphenol A bis(diphenyl phosphate), and the like, and combinations thereof.

In some embodiments, the composition can exclude or be substantially free of components other than those described above. For example, the composition can be substantially free of other polymeric materials, such as homopolystyrenes (including syndiotactic polystyrenes), polyamides, polyesters, polycarbonates, ethylene/alpha-olefin copolymers, and polypropylene-graft-polystyrenes. In this context, the term "substantially free" means that none of the specified component is intentionally added.

The composition is useful as a replacement for poly(vinyl chloride) (PVC) in many applications. One advantage of substituting the composition for PVC is that the composition can be essentially free of halogens. Thus, in some embodiments, the composition comprises less than 1 weight percent total of halogens (fluorine, chlorine, bromine, and iodine). In some embodiments, the composition comprises less than 0.1 weight percent total of halogens. In some embodiments, the composition comprises no intentionally added halogens.

In some embodiments, the composition comprises a continuous polyolefin phase and a dispersed poly(arylene ether) phase. In other words, the composition comprises a continuous phase comprising polyolefin and a dispersed phase comprising poly(arylene ether). The presence of such phases can be detected by transmission electron microscopy as described in the working examples. The hydrogenated block copolymer can reside in a continuous phase, a dispersed phase, or at an interface between continuous and dispersed phases or between co-continuous phases.

The composition can be used to form articles that exhibit excellent physical properties and improved retention of those properties after chemical exposure. For example, articles formed from the composition are flexible. The composition's flexibility can be expressed as a flexural modulus less than or equal to 900 megapascals measured at 23°C according to ASTM D790. In some embodiments, the composition has a flexural modulus of 311 to 543 megapascals measured at 23°C according to ASTM D790. The composition's chemical resistance can be expressed as retention of at least 65 percent of its ribbon tensile strength after 20 hours immersion in a 50:50 weight/weight mixture of kerosene and SAE 10W30 motor oil at 50°C. A detailed procedure for the chemical resistance test is given in the working examples below. In some embodiments, the composition retains 65.8 to 73.4 percent of its ribbon tensile strength after 20 hours immersion in a 50:50 weight/weight mixture of kerosene and SAE 10W30 motor oil at 50°C.

One embodiment is a composition consisting of: about 10 to about 35 weight percent of a poly(arylene ether); about 15 to about 40 weight percent of a polyolefin; about 10 to about 35 weight percent of a hydrogenated block copolymer of an alkenyl aromatic compound and a conjugated diene; wherein the hydrogenated block copolymer has a poly(alkenyl aromatic) content of about 10 to 45 weight percent, based on the total weight of the hydrogenated block copolymer; and wherein the hydrogenated block copolymer has a weight average molecular weight greater than or equal to 200,000 atomic mass units; optionally, up to 10 weight percent of a second hydrogenated block copolymer of an alkenyl aromatic compound and a conjugated diene; wherein the second hydrogenated block copolymer has a poly(alkenyl aromatic) content of about 10 to 45 weight percent, based on the total weight of the hydrogenated block copolymer, and a weight average molecular weight of about 40,000 to less than 200,000 atomic mass units; optionally, up to 10 weight percent of a third hydrogenated block copolymer of an alkenyl aromatic compound and a conjugated diene; wherein the third hydrogenated block copolymer has a poly(alkenyl aromatic) content of greater than 45 to about 90 weight percent, based on the total weight of the third hydrogenated block copolymer; optionally, up to 5 weight percent of an unhydrogenated block copolymer of an alkenyl aromatic compound and a conjugated diene; optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, metal deactivators, antiblocking agents, nanoclays, and combinations thereof; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

One embodiment is a composition comprising: about 15 to about 30 weight percent of a poly(2,6-dimethyl-1,4-phenylene ether) having an intrinsic viscosity of about 0.3 to about 0.6 deciliter per gram, measured at 25°C in chloroform; about 15 to about 35 weight percent of a polyolefin selected from the group consisting of polypropylene, high density polyethylene, and combinations thereof; about 10 to about 30 weight percent of a hydrogenated block copolymer that is a polystyrene-poly(ethylene-butylene)-polystyrene triblock copolymer; wherein the hydrogenated block copolymer has a polystyrene content of about 25 to about 35 weight percent, based on the total weight of the hydrogenated block copolymer; and wherein the hydrogenated block copolymer has a weight average molecular weight of 200,000 to about 400,000 atomic mass units; about 1 to about 10 weight percent of melamine polyphosphate; about 2 to about 10 weight percent of magnesium hydroxide; and about 5 to about 20 weight percent of a triaryl phosphate flame retardant; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

One embodiment is a composition consisting of: about 15 to about 30 weight percent of a poly(2,6-dimethyl-1,4-phenylene ether) having an intrinsic viscosity of about 0.3 to about 0.6 deciliter per gram, measured at 25°C in chloroform; about 15 to about 35 weight percent of a polyolefin selected from the group consisting of polypropylene, high density polyethylene, and combinations thereof; about 10 to about 30 weight percent of a hydrogenated block copolymer that is a polystyrene-poly(ethylene-butylene)-polystyrene triblock copolymer; wherein the hydrogenated block copolymer has a polystyrene content of about 25 to about 35 weight percent, based on the total weight of the hydrogenated block copolymer; and wherein the hydrogenated block copolymer has a weight average molecular weight of 200,000 to about 400,000 atomic mass units; optionally, up to 10 weight percent of a second hydrogenated block copolymer of an alkenyl aromatic compound and a conjugated diene, wherein the second hydrogenated block copolymer has a poly(alkenyl aromatic) content of about 10 to 45 weight percent, based on the total weight of the hydrogenated block copolymer, and a weight average molecular weight of about 40,000 to less than 200,000 atomic mass units; optionally, up to 10 weight percent of a third hydrogenated block copolymer of an alkenyl aromatic compound and a conjugated diene, wherein the third hydrogenated block copolymer has a poly(alkenyl aromatic) content of greater than 45 to about 90 weight percent, based on the total weight of the third hydrogenated block copolymer; optionally, up to 5 weight percent of an unhydrogenated block copolymer of an alkenyl aromatic compound and a conjugated diene; optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, metal deactivators, antiblocking agents, nanoclays, and combinations thereof; about 1 to about 10 weight percent of melamine polyphosphate; about 2 to about 10 weight percent of magnesium hydroxide; and about 5 to about 20 weight percent of a triaryl phosphate flame retardant; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

One embodiment is a composition comprising: about 18 to about 25 weight percent of a poly(2,6-dimethyl-1,4-phenylene ether) having an intrinsic viscosity of about 0.3 to about 0.6 deciliter per gram, measured at 25°C in chloroform; about 20 to about 30 weight percent of a polyolefin selected from the group consisting of polypropylene, high density polyethylene, and combinations thereof; about 15 to about 25 weight percent of a hydrogenated block copolymer that is a polystyrene-poly(ethylene-butylene)-polystyrene triblock copolymer; wherein the hydrogenated block copolymer has a polystyrene content of about 25 to about 35 weight percent, based on the total weight of the hydrogenated block copolymer; and wherein the hydrogenated block copolymer has a weight average molecular weight of 200,000 to about 400,000 atomic mass units; about 1 to about 10 weight percent of melamine polyphosphate; about 2 to about 10 weight percent of magnesium hydroxide; and about 5 to about 20 weight percent of a triaryl phosphate flame retardant; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

One embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 25 to about 27 weight percent of a high density polyethylene; about 15 to about 17 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 3 to about 5 weight percent of a third hydrogenated block copolymer that is a polystyrene-poly(ethylene-butylene)-polystyrene triblock copolymer; wherein the third hydrogenated block copolymer has a polystyrene content of about 55 to about 75 weight percent, based on the total weight of the hydrogenated block copolymer; and wherein the third hydrogenated block copolymer has a weight average molecular weight of about 30,000 to about 60,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-ter-t-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

Another embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 23 to about 25 weight percent of a high density polyethylene; about 19 to about 21 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 1 to about 3 weight percent of a second hydrogenated block copolymer that is a polystyrene-poly(ethylene-butylene)-polystyrene triblock copolymer; wherein the second hydrogenated block copolymer has a polystyrene content of about 25 to about 35 weight percent, based on the total weight of the hydrogenated block copolymer; and wherein the second hydrogenated block copolymer has a weight average molecular weight of about 100,000 to about 140,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-tert-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

One embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 25 to about 27 weight percent of a high density polyethylene; about 15 to about 17 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 3 to about 5 weight percent of a second hydrogenated block copolymer that is a polystyrene-poly(ethylene-butylene)-polystyrene triblock copolymer; wherein the second hydrogenated block copolymer has a polystyrene content of about 25 to about 35 weight percent, based on the total weight of the hydrogenated block copolymer; and wherein the second hydrogenated block copolymer has a weight average molecular weight of about 100,000 to about 140,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-ter-t-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

One embodiment is a composition comprising: about 21 to about 23 weight percent of a poly(2,6-dimethyl-1,4-phenylene ether) having an intrinsic viscosity of about 0.3 to about 0.6 deciliter per gram, measured at 25°C in chloroform; about 23 to about 25 weight percent of a high density polyethylene; about 15 to about 17 weight percent of a first hydrogenated block copolymer that is a polystyrene-poly(ethylene-butylene)-polystyrene triblock copolymer; wherein the first hydrogenated block copolymer has a polystyrene content of about 25 to about 35 weight percent, based on the total weight of the hydrogenated block copolymer; and wherein the first hydrogenated block copolymer has a weight average molecular weight of 200,000 to about 400,000 atomic mass units; about 5 to about 7 weight percent of a second hydrogenated block copolymer that is a polystyrene-poly(ethylene-butylene)-polystyrene triblock copolymer; wherein the second hydrogenated block copolymer has a polystyrene content of about 25 to about 35 weight percent, based on the total weight of the hydrogenated block copolymer; and wherein the second hydrogenated block copolymer has a weight average molecular weight of about 100,000 to about 140,000 atomic mass units; about 3 to about 5 weight percent of mineral oil; about 0.05 to about 0.5 weight percent of pentaerythritol tetrakis(3-(3,5-di-tert-butyl-4-hydroxy-phenyl)propionate); about 0.05 to about 0.5 weight percent of bis(2,4-di-*tert*-butylphenyl)pentaerythritol diphosphite; about 5 to about 7 weight percent of melamine polyphosphate; about 5 to about 7 weight percent of magnesium hydroxide; and about 15 to about 17 weight percent of resorcinol bis(diphenyl phosphate); wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 600 megapascals measured at 23°C according to ASTM D790. In some embodiments, the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

Other embodiments include methods of preparing the composition. The composition can be prepared by melt kneading the components. Thus, one embodiment is a method of preparing a thermoplastic composition, comprising: melt kneading about 10 to about 35 weight percent of a poly(arylene ether); about 15 to about 40 weight percent of a polyolefin; and about 10 to about 35 weight percent of a hydrogenated block copolymer of an alkenyl aromatic compound and a conjugated diene; wherein the hydrogenated block copolymer has a poly(alkenyl aromatic) content of about 10 to 45 weight percent, based on the total weight of the hydrogenated block copolymer; and wherein the hydrogenated block copolymer has a weight average molecular weight greater than or equal to 200,000 atomic mass units; wherein all weight percents are based on the total weight of the composition, unless a different weight basis is specified; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790. Apparatus suitable for melt kneading includes, for example, a two-roll mill, a Banbury mixer, and a single-screw or twin-screw extruder. In some embodiments, melt kneading comprises using a twin-screw extruder.

Another embodiment is a method of preparing a thermoplastic composition, comprising: melt kneading about 15 to about 30 weight percent of a poly(2,6-dimethyl-1,4-phenylene ether) having an intrinsic viscosity of about 0.3 to about 0.6 deciliter per gram, measured at 25°C in chloroform; about 15 to about 35 weight percent of a polyolefin selected from the group consisting of polypropylene, high density polyethylene, and combinations thereof; about 10 to about 30 weight percent of a polystyrene-poly(cthylenc/butylene)-polystyrene triblock copolymer having a polystyrene content of about 25 to about 35 weight percent, based on the total weight of the triblock copolymer; and wherein the triblock copolymer has a weight average molecular weight of 200,000 to about 400,000 atomic mass units; about 1 to about 10 weight percent of melamine polyphosphate; about 2 to about 10 weight percent of magnesium hydroxide; and about 5 to about 20 weight percent of a triaryl phosphate flame retardant to form a blend; wherein all weight percents are based on the total weight of the composition, unless a different weight basis is specified; and melt filtering the blend through a filter comprising openings with diameters of about 20 micrometers to about 150 micrometers; wherein the composition has a ribbon tensile strength of at least 15 megapascals measured at 23°C according to JIS K6251; wherein the composition retains at least 65 percent of its ribbon tensile strength after 20 hours immersion in a 50:50 weight/weight mixture of kerosene and SAE 10W30 motor oil at 50°C; and wherein the composition has a flexural modulus less than or equal to 900 megapascals measured at 23°C according to ASTM D790.With regard to the melt filtering step, the opening diameters can specifically be about 30 to about 130 micrometers, more specifically about 40 to about 110 micrometers. In some embodiments the molten mixture is melt filtered through one or more filters having openings with a maximum diameter that is less than or equal to half of the minimum thickness of an article to be molded or extruded from the composition. Suitable apparatuses and procedures for melt filtration are described, for example, in U.S. Patent Application Publication Nos. US 2005/0046070 A1 and US 2005/0064129 A1 of Dong et al., and US 2005/0250932 A1 of Hossan et al. When the composition is prepared using an extruder, the physical properties of the composition can be improved if the polyolefin is added downstream of the other components. Thus, in some embodiments, the poly(2,6-dimethyl-1,4-phenylene ether), the polystyrene-poly(ethylene/butylene)-polystyrene triblock copolymer, the melamine polyphosphate, the magnesium hydroxide, and the triaryl phosphate flame retardant are melt kneaded to form a first blend, and the first blend and the polyolefin are melt kneaded to form a second blend.

Other embodiments include articles comprising any of the compositions described above. For example, an article can comprise a film, sheet, molded object, or composite, wherein the film, sheet, molded object or composite comprises at least one layer comprising the composition. Articles can be prepared from the composition using fabrication methods known in the art, including, for example, single layer and multilayer foam extrusion, single layer and multilayer sheet extrusion, injection molding, blow molding, extrusion, film extrusion, profile extrusion, pultrusion, compression molding, thermoforming, pressure forming, hydroforming, vacuum forming, foam molding, and the like. Combinations of the foregoing article fabrication methods can be used. The composition is suitable for use as a covering for electrically or optically conducting wire and cable. The composition is particularly suitable for fabricating tubes for sheathing (bundling) automotive wiring harnesses. In some embodiments, such tubes have an internal diameter of about 2 to about 30 millimeters and a wall thickness of about 0.2 to about 1.2 millimeters.

The invention is further illustrated by the following non-limiting examples.

### EXAMPLES 1-4, COMPARATIVE EXAMPLE 1

These examples illustrate that compositions prepared from poly(arylene ether), and high molecular weight, hydrogenated block copolymers exhibit excellent mechanical properties and high retention of these properties after extended exposure to solvents.

The poly(arylene ether) (PPE) was a poly(2,6-dimethyl-1,4-phenylene ether) having an intrinsic viscosity of about 0.46 deciliter per gram (dL/g), measured in chloroform at 25°C, obtained as PPO*646 from GE Plastics. A high density polyethylene (HDPE) reported to have a melt flow rate of 0.7 grams per 10 minutes (g/10min), determined according to ASTM D1238 at a temperature of 190°C and a load of 2.16 kilograms, was obtained as LR5900-00 from Equistar. A poly(ethylene-octene) produced using a metallocene catalyst and having a melt flow rate of 1.1 decigrams per minute measured according to ISO 1133 at 190°C and a load of 2.16 kilograms and a Vicat softening temperature of 55°C measured according to ISO 306 at force of 10 Newtons was obtained as EXACT 8201 from DEXPLASTOMERS and is referred to in Table 1 as "PEO". A polystyrene-poly(ethylene/butylene)-polystyrene triblock copolymer having a styrene content of 31 weight percent based on the total weight of the block copolymer, and a weight average molecular weight of 240,000-301,000 atomic mass units (AMU) was obtained from KRATON Polymers under the grade name KRATON G 1651, and is referred to in Table 1 as "SEBS I". A polystyrene-poly(ethylene/butylene)-polystyrene triblock copolymer having a styrene content of 30 weight percent based on the total weight of the block copolymer, and a weight average molecular weight of 117,000 AMU was obtained from KRATON Polymers under the grade name KRATON G 1650, and is referred to in Table 1 as "SEBS 11". A polystyrene-poly(ethyleneibutylene)-polystyrene triblock copolymer having a styrene content of 67 weight percent based on the total weight of the block copolymer, and a weight average molecular weight of about 40,000 to 56,000 atomic mass units (AMU) was obtained as TUFTEC H1043 from Asahi Chemical, and is referred to in Table 1 as "SEBS III". Melamine polyphosphate ("MPP" in Table 1) was obtained as Melapur 200 from Ciba Specialty Chemicals. Magnesium hydroxide ("Mg(OH)₂" in Table 1) was obtained as Magshield UF NB10 from Martin Marietta. A hindered phenolic antioxidant ("Phen. AO" in Table 1), pentaerythritol tetrakis(3-(3,5-di-tert-butyl-4-hydroxy-phenyl)propionate), CAS Reg. No. 6683-19-8, was obtained as Irganox 1010 from Ciba Specialty Chemicals. A phosphite antioxidant ("Phos. AO" in Table 1), bis(2,4-di-*tert*-butylphenyl)pentaerythritol diphosphite, CAS Reg. No. 26741-53-7, was obtained as Ultranox 626 from Chemtura Corporation. Resorcinol bis(diphenyl phosphate) (RDP; Chemical Abstracts Services Registry No. 57583-54-7) was obtained from Supresta. Mineral oil was obtained from Penreco.

All components were blended simultaneously in a melt kneading process. A dry blend containing the poly(arylene ether), the hydrogenated block copolymers, melamine polyphosphate, magnesium hydroxide, mineral oil, Phos. AO, and Phen. AO was added in the feed throat in a 30-millimeter, 10-zone twin-screw extruder operating at 350 rotations per minute with barrel temperatures from feed throat to die of 240°C, 260°C, 270°C, and 270°C. The twin-screw extruder uses downstream feeders in zone 3 and zone 7 out of 10 zones. The zone 3 feeder was used to add RDP. The zone 7 feeder was used for addition of polyolefin. A vacuum vent was located in zone 10 with 20-25 inches of mercury vacuum being applied. The feed rate was about 16 to 18 kilograms per hour (35-40 pounds per hour). The screw design employed had fairly intensive mixing in zones 2 to 4 with relatively mild mixing in zone 9. The extrudate was cooled and pelletized. Test samples were injection molded using a barrel temperature of 240°C and a mold temperature of 65°C.

Flexural modulus values ("Flexural Modulus (MPa)" in Table 1), expressed in megapascals (MPa), were measured according to ASTM D790-03, Method A at 23°C using samples having a depth of 3.2 millimeters and a width of 12.7 millimeters, a support span length of 5.08 centimeters (2 inches), and a crosshead motion rate of 1.27 millimeter/minute (0.05 inch/minute). Notched Izod impact strength values ("Notched Izod impact strength (J/m)" in Table 1), expressed in joules per meter (J/m), were measured according to ASTM D256-06, Method A at 23°C using a 0.907 kilogram (2.00 pound) hammer, and specimens having a notch such that at least 1.02 centimeter (0.4 inch) of the original 1.27 centimeter (0.5 inch) depth remained under the notch; the specimens were conditioned for 24 hours at 23°C after notching. Heat deflection temperature values ("Heat deflection temperature (°C)" in Table 1), expressed in degrees centigrade (°C), were measured according to ASTM D648-06, Method B using a load of 0.45 megapascals and injection molded specimens having a width of 3.20 millimeters and a depth of 12.80 millimeters; specimens were conditioned for 24 hours at 23°C before testing. For heat deflection testing, samples were immersed in silicone oil, which was heated at 2°C per minute from an initial temperature less than 30°C. Tensile elongation values ("Tensile elongation at break (%)" in Table 1), expressed in units of percent, and tensile strength values ("Tensile stress at break (MPa)" in Table 1), expressed in units of megapascals, were determined at break using ASTM D638-03 at a temperature of 23°C and a pull rate of 50 millimeters per minute using Type I bars having a thickness of 3.2 millimeters. The values presented in Table 1 represent the average of three samples. Dynatup total energy values ("Total Dynatup energy" in Table 1) were determined at 23°C and -30°C according to ASTM D3763-06 using a velocity of 3.3 meters/seconds and disks having a thickness of 3.2 millimeters. Vicat softening temperature values ("Vicat temperature (°C)" in Table 1) were measured according to ASTM D1525-06 using a 10 Newton load and a rate of temperature change of 120°C/hour.

The tensile test used in the oil resistance test was a modified version of JIS K6251:2004. Each composition to be tested was extruded as a ribbon having a width of about 4 centimeters and a thickness of about 0.52 millimeters. Dumbbell-shaped test pieces as specified in JIS K6251:2004 Type 3 were pressed out from the ribbons. The test pieces had a uniform thickness of about 0.52 millimeters, a width of 25 millimeters on the last 15 millimeters of each end, a gradual narrowing of the width for the portion 15 to 40 millimeters from each end, and a narrow center width 20 millimeters long. The test piece was attached to the tensile tester and pulled at a constant rate of 200 millimeters per minute. The gage length was set at 33 mm and the elongation ("Ribbon tensile elongation at break (%)" in Table 1) was defined as the ratio of the total extension to the gage length. For example, if the total extension is 88 mm, then elongation is 266% (88/33x100). The tensile strength ("Ribbon tensile strength (MPa)" in Table 1) was defined as the ratio of the tensile force at break to the cross-sectional area of the test piece. The oil resistance test was a modified version of ISO1817:2005 with the above test pieces. These test pieces were immersed in a 50:50 weight/weight mixture of kerosene and SAE 10W30 motor oil for 20 hours at 50°C. Samples were then removed from the kerosene-oil mixture, wiped, and allowed to dry at 23°C and 50% relative humidity for four hours before the post-soak tensile strength test ("Post-soak ribbon tensile strength (MPa)" in Table 1).

The compositions and properties are presented in Table 1. Component amounts are in weight percent (wt%) based on the total weight of the composition. Unless noted, property values are for samples not subjected to chemical resistance testing. The extent to which tensile properties were retained in the samples subjected to chemical resistance testing is expressed as a "retention" value. For instance, for Example 1, the ribbon tensile strength was 19.8 megapascals, the post-soak ribbon tensile strength was 14.52 megapascals, and the tensile strength retention was 73.4% (100x 14.52/19.8).

**TABLE 1**

| | C.Ex.1 I | Ex. 1 | Ex. 2 | Ex.3 | Ex. 4 | C. Ex. 2 |
|---|---|---|---|---|---|---|
| Compositions | | | | | | |
| PPE | 21.98 | 21.98 | 21.98 | 21.98 | 21.98 | 32.30 |
| MPP | 6.28 | 6.28 | 6.28 | 6.28 | 6.28 | 3.70 |
| Mg(OH)₂ | 6.28 | 6.28 | 6.28 | 6.28 | 6.28 | 3.70 |
| SEBS I | 0 | 15.70 | 19.62 | 15.70 | 15.70 | 0 |
| SEBS II | 15.70 | 0 | 2.35 | 3.92 | 6.28 | 6.50 |
| SEBS III | 3.92 | 3.92 | 0 | 0 | 0 | 2.80 |
| Mineral Oil | 3.92 | 3.92 | 3.92 | 3.92 | 3.92 | 0 |
| Phen. AO | 0.16 | 0.16 | 0.16 | 0.16 | 0.16 | 0.20 |
| Phos. AO | 0.16 | 0.16 | 0.16 | 0.16 | 0.16 | 0.20 |
| PEO | 0 | 0 | 0 | 0 | 0 | 23.10 |
| HDPE | 25.90 | 25.90 | 23.55 | 25.90 | 23.55 | 18.50 |
| RDP | 15.70 | 15.70 | 15.70 | 15.70 | 15.70 | 9.20 |

| Properties | | | | | | |
|---|---|---|---|---|---|---|
| Flexural Modulus (MPa) | 559 | 543 | 418 | 461 | 311 | 650 |
| Ribbon tensile strength (MPa) | 20.8 | 19.8 | 17.4 | 18.7 | 16.1 | 32.5 |
| Post-soak ribbon tensile strength (MPa) | 12.5 | 14.52 | 12.2 | 12.3 | 10.8 | 13.0 |
| Ribbon tensile strength retention (%) | 60.0 | 73.4 | 70.1 | 65.8 | 66.9 | 40.1 |
| Ribbon tensile elongation at break (%) | 192 | 240.6 | 265.6 | 187 | 388.1 | 140.8 |
| Tensile elongation at break (%) | 160 | 130 | 90 | 80 | 150 | 90 |
| Tensile stress at break (MPa) | 20.3 | 16.4 | 13 | 14 | 11.8 | 24.2 |
| Heat deflection temperature (°C) | 54.4 | 63 | 53.9 | 61.4 | 52.4 | 78.1 |
| Total Dynatup energy @ 23°C (J) | 29.5 | 23 | 22.8 | 17 | 23.7 | 33.1 |
| Total Dynatup energy @ -30°C (J) | 27.6 | 16.8 | 3.13 | 4.86 | 6.68 | 26.8 |
| Notched Izod impact strength (J/m) | 483 | 463 | 429 | 327 | 481 | 622 |
| Vicat temperature (°C) | 98.4 | 102 | 95.2 | 102 | 93.3 | 98.5 |

Table 1 shows that as the ratio of the amount of high molecular weight unfunctionalized block copolymer to low molecular weight unfunctionalized block copolymer decreases in the compositions, so does the strength retention of the test samples. Recall that percent tensile strength retention after chemical exposure, rather than the absolute value of tensile strength after chemical exposure, is the best indicator of chemical resistance. Example 1 was prepared with no low molecular weight unfunctionalized block copolymer, and it exhibits the highest strength retention percentage.

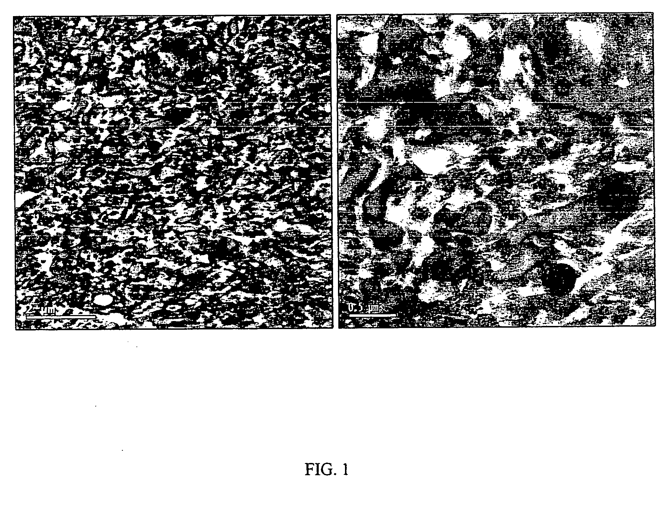

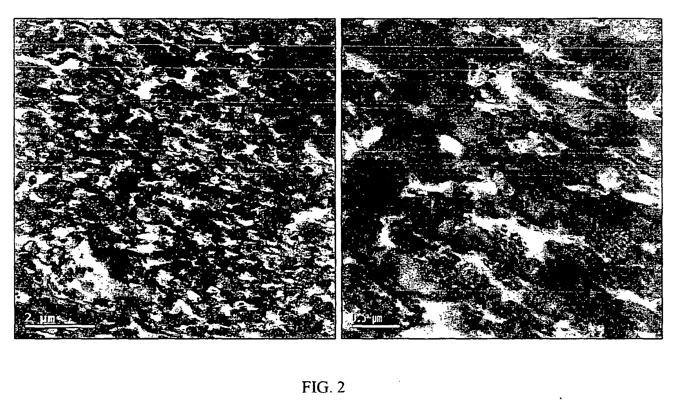

The samples corresponding to Comparative Example 1 and Example 1 were analyzed by transmission electron microscopy. To prepare a sample for electron microscopy, the composition is injection molded into a disc having a 3.2 millimeters thickness as is used in an ASTM D 3763-02 (Dynatup impact strength) test. A portion located at the center (in terms of diameter) of the disc is removed and then sections having a thickness of 100 nanometers are removed from the center (in terms of thickness) of the portion. The sections are stained in freshly prepared ruthenium tetroxide staining solution for 30 seconds. The microscopy studies can be performed on an electron microscope such as a Technai G2. Digital image acquisition can be performed using a camera such as a Gatan Model 791 side mount camera. Representative micrographs are presented in Figure 1 (Comparative Example 1) and Figure 2 (Example 1). In all micrographs, the lightest areas correspond to high density polyethylene, the gray areas correspond to poly(arylene ether), and the areas of dark honeycomb-like structure correspond to block copolymer. The micrographs show that both samples have a well-dispersed poly(arylene ether) phase within a continuous polyethylene phase.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A composition comprising:
10 to 35 weight percent of a poly(arylene ether);
15 to 40 weight percent of a polyolefin; and
10 to 35 weight percent of a hydrogenated block copolymer of an alkenyl aromatic compound and a conjugated diene; wherein the hydrogenated block copolymer has a poly(alkenyl aromatic) content of 10 to 45 weight percent, based on the total weight of the hydrogenated block copolymer; and wherein the hydrogenated block copolymer has a weight average molecular weight greater than or equal to 200,000 atomic mass units;
wherein all weight percents are based on the total weight of the composition, unless a different weight basis is specified;
wherein the composition has a ribbon tensile strength of at least 15 megapascals measured at 23°C according to JIS K6251;
wherein the composition retains at least 65 percent of its ribbon tensile strength after 20 hours immersion in a 50:50 weight/weight mixture of kerosene and SAE 10W30 motor oil at 50°C; and
wherein the composition has a flexural modulus less than or equal to 900 megapascals measured at 23°C according to ASTM D790.

2. The composition of claim 1, wherein the composition has a ribbon tensile strength of 15 to 19.8 megapascals measured at 23°C according to JIS K6251.

3. The composition of claim 1, wherein the composition retains 65 to 73.4 percent of its ribbon tensile strength after 20 hours immersion in a 50:50 weight/weight mixture of kerosene and SAE 10W30 motor oil at 50°C.

4. The composition of claim 1, wherein the composition has a flexural modulus of 311 to 900 megapascals measured at 23°C according to ASTM D790.

5. The composition of claim 1,
wherein the composition comprises 15 to 30 weight percent of the poly(arylene ether);
wherein the poly(arylene ether) is a poly(2,6-dimethyl-1,4-phenylene ether) having an intrinsic viscosity of 0.3 to 0.6 deciliter per gram, measured at 25°C in chloroform;
wherein the composition comprises 15 to 35 weight percent of the polyolefin;
wherein the polyolefin is selected from the group consisting of polypropylene, high density polyethylene, and combinations thereof;
wherein the composition comprises 10 to 30 weight percent of the hydrogenated block copolymer;
wherein the hydrogenated block copolymer is a polystyrene-poly(ethylene-butylene)-polystyrene triblock copolymer;
wherein the hydrogenated block copolymer has a polystyrene content of 25 to 35 weight percent, based on the total weight of the hydrogenated block copolymer;
wherein the hydrogenated block copolymer has a weight average molecular weight of 200,000 to 400,000 atomic mass units;
wherein the composition further comprises 1 to 10 weight percent of melamine polyphosphate, 2 to 10 weight percent of magnesium hydroxide, and 5 to 20 weight percent of a triaryl phosphate flame retardant;
wherein the composition has a ribbon tensile strength of at least 15 megapascals measured at 23°C according to JIS K6251;
wherein the composition retains at least 65 percent of its ribbon tensile strength after 20 hours immersion in a 50:50 weight/weight mixture of kerosene and SAE 10W30 motor oil at 50°C; and
wherein the composition has a flexural modulus less than or equal to 600 megapascals measured at 23°C according to ASTM D790.

6. The composition of claim 5, wherein the composition has a ribbon tensile strength of 15 to 19.8 megapascals measured at 23°C according to JIS K6251; wherein the composition retains 65 to 78 percent of its ribbon tensile strength after 20 hours immersion in a 50:50 weight/weight mixture of kerosene and SAE 10W30 motor oil at 50°C; and wherein the composition has a flexural modulus of 311 to 600 megapascals measured at 23°C according to ASTM D790.

7. An article comprising the composition of any of claims 1, 2, 3, 4, 5, or 6.

8. A tube for sheathing an automotive wiring harness, comprising the composition of any of claims 1, 2, 3, 4, 5, or 6.

9. A method of preparing a thermoplastic composition, comprising:
melt kneading
15 to 30 weight percent of a poly(2,6-dimethyl-1,4-phenylene ether) having an intrinsic viscosity of 0.3 to 0.6 deciliter per gram, measured at 25°C in chloroform;
15 to 35 weight percent of a polyolefin selected from the group consisting of polypropylene, high density polyethylene, and combinations thereof;
10 to 30 weight percent of a polystyrene-poly(ethylene/butylene)-polystyrene triblock copolymer having a polystyrene content of 25 to 35 weight percent, based on the total weight of the triblock copolymer; and wherein the triblock copolymer has a weight average molecular weight of 200,000 to 400,000 atomic mass units;
1 to 10 weight percent of melamine polyphosphate;
2 to 10 weight percent of magnesium hydroxide; and
5 to 20 weight percent of a triaryl phosphate flame retardant to form a blend; wherein all weight percents are based on the total weight of the composition, unless a different weight basis is specified; and
melt filtering the blend through a filter comprising openings with diameters of 20 micrometers to 150 micrometers;
wherein the composition has a ribbon tensile strength of at least 15 megapascals measured at 23°C according to JIS K6251;
wherein the composition retains at least 65 percent of its ribbon tensile strength after 20 hours immersion in a 50:50 weight/weight mixture of kerosene and SAE 10W30 motor oil at 50°C; and
wherein the composition has a flexural modulus less than or equal to 900 megapascals measured at 23°C according to ASTM D790.

10. The method of claim 9, wherein the poly(2,6-dimethyl-1,4-phenylene ether), the polystyrene-poly(ethylene/butylene)-polystyrene triblock copolymer, the melamine polyphosphate, the magnesium hydroxide, and the triaryl phosphate flame retardant are melt kneaded to form a first blend; and wherein the first blend and the polyolefin are melt kneaded to form a second blend.

## Patentansprüche

1. Zusammensetzung, umfassend
10 bis 35 Gewichtsprozent eines Poly(arylenethers);
15 bis 40 Gewichtsprozent eines Polyolefins; und
10 bis 35 Gewichtsprozent eines hydrierten Blockcopolymers aus einer alkenylaromatischen Verbindung und einem konjugierten Dien; wobei das hydrierte Blockcopolymer einen poly(alkenylaromatischen) Gehalt von 10 bis 45 Gewichtsprozent auf der Basis des Gesamtgewichts des hydrierten Blockcopolymers aufweist; und wobei das hydrierte Blockcopolymer ein Gewichtsmittel des Molekulargewichts von größer als oder gleich 200.000 Atommasseneinheiten aufweist;
wobei sämtliche Gewichtsprozentanteile auf dem Gesamtgewicht der Zusammensetzung basieren, wenn keine andere Gewichtsbasis spezifiziert ist;
wobei die Zusammensetzung eine bei 23°C gemäß JIS K6251 gemessene Bandzugfestigkeit von mindestens 15 Megapascal aufweist;
wobei die Zusammensetzung nach 20-stündigem Eintauchen in ein Gemisch von 50:50 Gewicht/Gewicht aus Kerosin und Motoröl des Typs SAE 10W30 bei 50°C mindestens 65 Prozent ihrer Bandzugfestigkeit beibehält; und
wobei die Zusammensetzung einen bei 23°C gemäß ASTM D790 gemessenen Biegemodul von weniger als oder gleich 900 Megapascal aufweist.

2. Zusammensetzung nach Anspruch 1, wobei die Zusammensetzung eine bei 23°C gemäß JIS K6251 gemessene Bandzugfestigkeit von 15 bis 19,8 Megapascal aufweist.

3. Zusammensetzung nach Anspruch 1, wobei die Zusammensetzung nach 20-stündigem Eintauchen in ein Gemisch von 50:50 Gewicht/Gewicht aus Kerosin und Motoröl des Typs SAE 10W30 bei 50°C 65 bis 73,4 Prozent ihrer Bandzugfestigkeit beibehält.

4. Zusammensetzung nach Anspruch 1, wobei die Zusammensetzung einen bei 23°C gemäß ASTM D790 gemessenen Biegemodul von 311 bis 900 Megapascal aufweist.

5. Zusammensetzung nach Anspruch 1,
wobei die Zusammensetzung 15 bis 30 Gewichtsprozent des Poly(arylenethers) umfasst;
wobei es sich bei dem Poly(arylenether) um einen Poly(2,6-dimethyl-1,4-phenylenether) mit einer bei 25°C in Chloroform gemessenen Grenzviskosität von 0,3 bis 0,6 Deziliter pro Gramm handelt;
wobei die Zusammensetzung 15 bis 35 Gewichtsprozent des Polyolefins umfasst;
wobei das Polyolefin ausgewählt ist aus der Gruppe, bestehend aus Polypropylen, Polyethylen mit hoher Dichte und Kombinationen davon;
wobei die Zusammensetzung 10 bis 30 Gewichtsprozent des hydrierten Blockcopolymers umfasst;
wobei es sich bei dem hydrierten Blockcopolymer um ein Polystyrol-Poly(ethylen-butylen)-Polystyrol-Triblockcopolymer handelt;
wobei das hydrierte Blockcopolymer einen Polystyrolgehalt von 25 bis 35 Gewichtsprozent auf der Basis des Gesamtgewichts des hydrierten Blockcopolymers aufweist;
wobei das hydrierte Blockcopolymer ein Gewichtsmittel des Molekulargewichts von 200.000 bis 400.000 Atommasseneinheiten aufweist;
wobei die Zusammensetzung des Weiteren 1 bis 10 Gewichtsprozent Melaminpolyphosphat, 2 bis 10 Gewichtsprozent Magnesiumhydroxid und 5 bis 20 Gewichtsprozent eines Triarylphosphat-Flammhemmers umfasst;
wobei die Zusammensetzung eine bei 23°C gemäß JIS K6251 gemessene Bandzugfestigkeit von mindestens 15 Megapascal aufweist;
wobei die Zusammensetzung nach 20-stündigem Eintauchen in ein Gemisch von 50:50 Gewicht/Gewicht aus Kerosin und Motoröl des Typs SAE 10W30 bei 50°C mindestens 65 Prozent ihrer Bandzugfestigkeit beibehält; und
wobei die Zusammensetzung einen bei 23°C gemäß ASTM D790 gemessenen Biegemodul von weniger als oder gleich 600 Megapascal aufweist.

6. Zusammensetzung nach Anspruch 5, wobei die Zusammensetzung eine bei 23°C gemäß JIS K6251 gemessene Bandzugfestigkeit von 15 bis 19,8 Megapascal aufweist; wobei die Zusammensetzung nach 20-stündigem Eintauchen in ein Gemisch von 50:50 Gewicht/Gewicht aus Kerosin und Motoröl des Typs SAE 10W30 bei 50°C 65 bis 78 Prozent ihrer Bandzugfestigkeit beibehält und wobei die Zusammensetzung einen bei 23°C gemäß ASTM D790 gemessenen Biegemodul von 311 bis 600 Megapascal aufweist.

7. Gegenstand, umfassend die Zusammensetzung nach einem der Ansprüche 1,2,3,4,5 oder 6.

8. Schlauch zum Umhüllen eines Automobilkabelstrangs, umfassend die Zusammensetzung nach einem der Ansprüche 1, 2, 3, 4, 5 oder 6.

9. Verfahren zur Herstellung einer thermoplastischen Zusammensetzung, umfassend:
Schmelzkneten von
15 bis 30 Gewichtsprozent eines Poly(2,6-dimethyl-1,4-phenylenethers) mit einer bei 25°C in Chloroform gemessenen Grenzviskosität von 0,3 bis 0,6 Deziliter pro Gramm;
15 bis 35 Gewichtsprozent eines Polyolefins, ausgewählt aus der Gruppe, bestehend aus Polypropylen, Polyethylen mit hoher Dichte und Kombinationen davon;
10 bis 30 Gewichtsprozent eines Polystyrol-Poly(ethylen/butylen)-Polystyrol-Triblockcopolymers mit einem Polystyrolgehalt von 25 bis 35 Gewichtsprozent auf der Basis des Gesamtgewichts des Triblockcopolymers und wobei das Triblockcopolymer ein Gewichtsmittel des Molekulargewichts von 200.000 bis 400.000 Atommasseneinheiten aufweist;
1 bis 10 Gewichtsprozent Melaminpolyphosphat;
2 bis 10 Gewichtsprozent Magnesiumhydroxid; und
5 bis 20 Gewichtsprozent eines Triarylphosphat-Flammhemmers
zum Bilden einer Mischung; wobei sämtliche Gewichtsprozentanteile auf dem Gesamtgewicht der Zusammensetzung basieren, wenn keine andere Gewichtsbasis spezifiziert ist; und
Schmelzfiltrieren der Mischung durch einen Filter, umfassend Öffnungen mit Durchmessern von 20 Mikrometern bis 150 Mikrometern;
wobei die Zusammensetzung eine bei 23°C gemäß JIS K6251 gemessene Bandzugfestigkeit von mindestens 15 Megapascal aufweist;
wobei die Zusammensetzung nach 20-stündigem Eintauchen in ein Gemisch von 50:50 Gewicht/Gewicht aus Kerosin und Motoröl des Typs SAE 10W30 bei 50°C mindestens 65 Prozent ihrer Bandzugfestigkeit beibehält; und
wobei die Zusammensetzung einen bei 23°C gemäß ASTM D790 gemessenen Biegemodul von weniger als oder gleich 900 Megapascal aufweist.

10. Verfahren nach Anspruch 9, wobei der Poly(2,6-dimethyl-1,4-phenylenether), das Polystyrol-Poly(ethylen/butylen)-Polystyrol-Triblockcopolymer, das Melaminpolyphosphat, das Magnesiumhydroxid und der Triarylphosphat-Flammhemmer unter Bildung einer ersten Mischung schmelzgeknetet werden; und wobei die erste Mischung und das Polyolefin unter Bildung einer zweiten Mischung schmelzgeknetet werden.

## Revendications

1. Une composition comprenant :
10 à 35 % en poids d'un poly(éther d'arylène) ;
15 à 40 % en poids d'une polyoléfine ; et
15 à 35 % en poids d'un copolymère à blocs hydrogéné d'un composé aromatique alcényle et d'un diène conjugué ; où le copolymère à blocs hydrogéné présente une teneur en poly(alcényle aromatique) de 10 à 45 % en poids, par rapport au poids total du copolymère à blocs hydrogéné ; et où le copolymère à blocs hydrogéné présente un poids moléculaire moyen supérieur ou égal à 200 000 unités de masse atomique ;
dans laquelle tous les pourcentages en poids sont par rapport au poids total de la composition, sauf si une base différente de poids est spécifiée ;
dans laquelle la composition présente une limite élastique à la traction en ruban d'au moins 15 mégapascals, mesurée à 23°C selon JIS K6251 ;
dans laquelle la composition conserve au moins 65 % de sa limite élastique à la traction en ruban après 20 heures d'immersion dans un mélange 50:50 poids/poids de kérosène et d'huile moteur SAE 10W30 à 50°C ; et
dans laquelle la composition présente un module en flexion inférieur ou égal à 900 mégapascals mesuré à 23°C selon ASTM D790.

2. La composition de la revendication 1, dans laquelle la composition présente une limite élastique à la traction en ruban de 15 à 19,8 mégapascals mesurée à 23°C selon JIS K6251.

3. La composition de la revendication 1, dans laquelle la composition conserve 65 à 73,4 % de sa limite élastique à la traction en ruban après 20 heures d'immersion dans un mélange 50:50 poids/poids de kérosène et d'huile moteur SAE 10W30 à 50°C.

4. La composition de la revendication 1, dans laquelle la composition présente un module en flexion de 311 à 900 mégapascals mesuré à 23°C selon ASTM D790.

5. La composition de la revendication 1,
dans laquelle la composition comprend 15 à 30 % en poids du poly(éther d'arylène) ;
dans laquelle le poly(éther d'arylène) est un poly(éther de 2,6-diméthyl-1,4-phénylène) ayant une viscosité intrinsèque de 0,3 à 0,6 décilitre par gramme, mesurée à 25°C dans le chloroforme ;
dans laquelle la composition comprend 15 à 35 % en poids de la polyoléfine ;
dans laquelle la polyoléfine est choisie dans le groupe constitué par le polypropylène, le polyéthylène haute densité et les combinaisons de ceux-ci ;
dans laquelle la composition comprend 10 à 30 % en poids du copolymère à blocs hydrogéné ;
dans laquelle le copolymère à blocs hydrogéné est un copolymère tribloc polystyrène-poly(éthylène/butylène)-polystyrène ;
dans laquelle le copolymère à blocs hydrogéné présente une teneur en polystyrène de 25 à 35 % en poids, par rapport au poids total du copolymère à blocs hydrogéné ;
dans laquelle le copolymère à blocs hydrogéné présente un poids moléculaire moyen en poids de 200 000 à 400 000 unités de masse atomique ;
dans laquelle la composition comprend en outre 1 à 10 % en poids de polyphosphate de mélamine, de 2 à 10 % en poids d'hydroxyde de magnésium et 5 à 20 % en poids d'un retardateur de flamme triarylphosphate ;
dans laquelle la composition présente une limite élastique à la traction en ruban d'au moins 15 mégapascals mesurée à 23°C selon JIS K6251 ;
dans laquelle la composition conserve au moins 65 % de sa limite élastique à la traction en ruban après 20 heures d'immersion dans un mélange 50:50 poids/poids de kérosène et d'huile moteur SAE 10W30 à 50°C ; et
dans laquelle la composition présente un module de flexion inférieur ou égal à 600 mégapascals mesuré à 23°C selon ASTM D790.

6. La composition de la revendication 5, dans laquelle la composition présente une limite élastique à la traction en ruban de 15 à 19,8 mégapascals mesurée à 23°C selon JIS K6251 ; dans laquelle la composition conserve 65 à 78 % de sa limite élastique à la traction en ruban après 20 heures d'immersion dans un mélange 50:50 poids/poids de kérosène et d'huile moteur SAE 10W30 à 50°C ; et dans laquelle la composition présente un module en flexion de 311 à 600 mégapascals mesuré à 23°C selon ASTM D790.

7. Un article comprenant la composition de l'une des revendications 1, 2, 3, 4, 5 ou 6.

8. Un tube pour gainer un faisceau de câblage automobile, comprenant la composition de l'une des revendications 1, 2, 3, 4, 5 ou 6.

9. Un procédé de préparation d'une composition thermoplastique, comprenant :
le malaxage à l'état fondu de :
15 à 30 % en poids d'un poly(éther de 2,6-diméthyl-1,4-phénylène) présentant une viscosité intrinsèque de 0,3 à 0,6 décilitre par gramme, mesurée à 25°C dans le chloroforme ;
15 à 35 % en poids d'une polyoléfine choisie dans la groupe formé par le polypropylène, le polyéthylène haute densité et les combinaisons de ceux-ci ;
10 à 30 % en poids d'un copolymère tribloc polystyrène-poly(éthylène/butylène)-polystyrène présentant une teneur en polystyrène de 25 à 35 % en poids, par rapport au poids total du copolymère tribloc ; et
où le copolymère tribloc présente un poids moléculaire moyen en poids de 200 000 à 40 000 unités de masse atomique ;
1 à 10 % en poids de polyphosphate de mélamine ;
2 à 10 % en poids d'hydroxyde de magnésium ; et
5 à 20 % en poids d'un retardateur de flamme au triarylphosphate
pour former un mélange ; où tous les pourcentages en poids sont par rapport au poids total de la composition sauf si une base de poids différente est spécifiée ; et
le filtrage à l'état fondu du mélange au travers d'un filtre comprenant des ouvertures avec des diamètres de 20 micromètres à 150 micromètres ;
dans lequel la composition présente une limite élastique à la traction en ruban d'au moins 15 mégapascals mesurée à 23°C selon JIS K6251 ;
dans lequel la composition conserve au moins 65 % de sa limite élastique à la traction en ruban après 20 heures d'immersion dans un mélange 50:50 poids/poids de kérosène et d'huile moteur SAE 10W30 à 50°C ; et
dans lequel la composition présente un module en flexion inférieur ou égal à 900 mégapascals mesuré à 23°C selon ASTM D790.

10. Le procédé de la revendication 9, dans lequel le poly(éther de 2,6-diméthyl-1,4-phénylène), le copolymère tribloc polystyrène-poly(éthylène/butylène)-polystyrène, le polyphosphate de mélamine, l'hydroxyde de magnésium et le retardateur de flamme au triarylphosphate sont malaxés à l'état fondu pour former un premier mélange ; et dans lequel le premier mélange et la polyoléfine sont malaxés à l'état fondu pour former un second mélange.
